# EUROPEAN PATENT SPECIFICATION

(11) **EP 2 554 808 B1**
(45) Date of publication and mention of the grant of the patent: **09.08.2017**
(21) Application number: 11759519.9
(22) Date of filing: 24.03.2011
(51) Int. Cl.: F01N 3/02, B01D 46/42, F01N 3/30, F01N 3/023

(54) **METHOD AND DEVICE FOR CLEANING FILTER FOR REMOVING PARTICULATE MATTER**
FILTERREINIGUNGSVERFAHREN UND -VORRICHTUNG ZUR ENTFERNUNG VON PARTIKELN
PROCÉDÉ ET DISPOSITIF PERMETTANT DE NETTOYER UN FILTRE POUR ÉLIMINER DES PARTICULES

(30) Priority: 26.03.2010 JP 2010072950
(43) Date of publication of application: 06.02.2013
(73) Proprietor: Yanmar Co., Ltd., Osaka-shi, Osaka 530-8311 (JP)
(72) Inventor: ONO, Taisuke, Osaka-shi Osaka 530-8311 (JP); KIYOKAWA, Katsumi, Osaka-shi Osaka 530-8311 (JP); HINATA, Ryousuke, Osaka-shi Osaka 530-8311 (JP); DEN, Touha, Osaka-shi Osaka 530-8311 (JP)
(74) Representative: Boult Wade Tennant
(86) International application number: PCT/JP2011/057196
(87) International publication number: WO 2011/118714

(56) References cited:
- EP-A2- 0 220 588
- WO-A1-02/094415
- WO-A1-2008/054262
- JP-A- 7 236 806
- JP-A- 2002 303 124
- JP-A- 2003 262 115
- JP-A- 2003 262 115
- JP-A- 2004 169 661
- US-A1- 2006 156 919

## Description

### TECHNICAL FIELD

The present invention relates to a method and an apparatus for cleaning a filter installed in an exhaust passage of an internal combustion engine or a burning appliance and capturing particulate matter included in exhaust gas.

### BACKGROUND ART

Particulate matters such as black smoke are included in exhaust gas from internal combustion engines or burning appliances. Internal combustion engines are, for example, a diesel engine, a gas engine, a gasoline engine, a gas turbine and so on. A burning appliance is, for example, a boiler. Previously, in order to remove the particulate matter from the exhaust gas, filters for physically capturing the particulate matter have been installed in exhaust passages in the internal combustion engines or the burning appliances.

As technologies for removing the captured particulate matter from a filter, the following technologies (A), (B), and (C) are put in practical use. The technology (A) removes particulate matter from a filter by burning the particulate matter captured by the filter with an electric heater or a burner and so on. The Technology (B) continuously removes particulate matter from a particulate filter by supporting a catalyst component with oxidation action to the filter or by installing an oxidation catalyst upstream of the filter. The technology (C) brush the captured particulate matter down from a filter by injecting high pressure air to the filter in the direction opposite to the flow direction of the exhaust gas.

The technology (A) needs big energy for raising temperature of the filter to the temperature where the particulate matter burns, and big running cost is required. However, since there are many sulfur contents contained in a fuel in an engine for generator and a marine engine, it is not possible to apply an oxidation catalyst regeneration system to the engine for generator or the marine engine.

On the other hand, there are the following problems in the technology (C). Soluble organic components resulting from a fuel or lubricating oil are contained in the particulate matter in the exhaust gas. When the exhaust gas temperature is high, at least some soluble organic components volatilize. The soluble organic components which became to be in the gaseous state by volatilization pass the filter. Therefore, many soluble organic components are prevented from remaining in the filter. On the other hand, since the soluble organic components do not volatilize when the exhaust gas temperature is low like at the time of engine starting or warming-up, the soluble organic components become high viscosity components. The soluble organic components which became to be the high viscosity components remain in the filter with black smoke and ash. When the high viscosity components remain in the particulate matter, it is difficult to brush the particulate matter down from the filter by injecting the high pressure air in the opposite direction. As a result, a differential pressure of the filter has risen, operation of a removal device for the particulate matter will become difficult.

There are technologies disclosed in the patent documents 1-3, as technologies for solving the problems in the technology (C), that is, technologies for removing the high viscosity components remaining in the filter.

The technology of the patent documents 1 firstly volatilizes oil mist (high viscosity components) contained in soot from a filter with heated high temperature air (heat regenerating gas). The technology secondly brushes off the soot that becomes to be easily exfoliated, by injecting compression air (compressed gas) to the filter in the opposite direction for the flow direction of the exhaust gas (back washing).

The technology of the patent documents 2 cleans a filter by injecting high pressure water (high pressured fluid) in the filter.

The technology of the patent documents 3 is a method of cleaning a filter by injecting water or water vapor of temperature higher than 80 degrees and of 0.5-2.0 MPa to the filter. The water vapor is sprayed so that it becomes to be in a liquid phase state at the time of arriving in the filter. Therefore, the patent document 3 also substantially cleans the filter with water like the patent document 2.

WO 2008/054262 A1 discloses a filter cleaning device for a particulate filter mounted in an exhaust conduit of a diesel engine. A filter cleaning device is mounted adjacent the filter and comprises a source of vacuum positioned to draw a cleaning fluid and waste material through the filter.

### CITATION LIST

### Patent Literature

The patent document 1: JP patent No. 3653055
The patent document 2: JP patent publication No. 2001-50028
The patent document 3: JP patent No. 3941550

### SUMMARY OF INVENTION

### Technical Problem

In order to remove the particulate matter from the filter, the technology of the patent documents 1 uses the high temperature air and the compressed air, and the technologies of the patent documents 2 and 3 use the water or the warm water.

In order to volatilize the oil mist from the filter, it is desirable to heat the accretions on the filter surface. Therefore, the technology of the patent documents 1 firstly heats the air in order to volatilize the oil mist from the filter before injecting the compressed air. Therefore, the technology of the patent documents 1 needs great energy.

In order to remove the particulate matter from the filter, the technology of the patent documents 1 uses the compressed air, and the technologies of the patent documents 2 and 3 use the water or the warm water. However, the detergency by the water, the warm water, or the compressed air is weaker than the detergency by the water vapor. In the case of the water, the warm water, or the compressed air, the detergency of the filter may be insufficient.

When the water is used for cleaning of the filter, the moisture remains in the filter. If the exhaust gas is added to this moisture, the soot may adhere or the sulfur contents may change to sulfuric acid.

That is, in cleaning by the high temperature air and the compressed air, or cleaning by the high pressure water, the particulate matter may be effectively unremovable from the filter. Therefore, the present invention provides a method and an apparatus for effectively removing the particulate matter from the filter.

### Solution to Problem

The present invention provides a method for cleaning a filter for removing particulate matter, the method injecting high-pressure air and high-pressure vapor to the filter in a opposite direction to a flow direction of exhaust gas, the filter installed in an exhaust passage of an internal combustion engine or a burning appliance and capturing the particulate matter included in the exhaust gas, wherein after the high-pressure vapor is injected to the filter, the high-pressure air is injected to the filter.

The present invention provides an apparatus for cleaning a filter for removing particulate matter, the apparatus comprising: a filter installed in a exhaust passage of an internal combustion engine or a burning appliance and capturing the particulate matter included in the exhaust gas; an injector being able to inject high-pressure air and high-pressure vapor to the filter in a opposite direction to a flow direction of the exhaust gas; a high-pressure air feeder being able to feed the high-pressure air to the injector; a high-pressure vapor feeder being able to feed the high-pressure vapor to the injector; a switch for alternatively feeding one of the high-pressure air and the high-pressure vapor to the injector; and a controller for controlling the switch so that after the high-pressure vapor is injected to the filter, the high-pressure air is injected to the filter.

The apparatus for cleaning the filter for the removing particulate matter according to the present invention can preferably adopt structure (b).

In the structure (b), the high-pressure vapor feeder is a water vapor generator generating the high-pressure vapor with the exhaust gas as a heat source.

### Advantageous Effects of Invention

In respect of calorific capacity, water vapor in a gas phase state is bigger than water in a liquid phase state or high-pressure air with the same temperature as the water vapor, and the water vapor holds big energy. Therefore, it is easy for the water vapor of the gas phase state to remove the high viscosity component from the filter, and the water vapor of the gas phase is effective for removal of the black smoke, the ash and so on. Therefore, the method for cleaning according to the present invention can effectively remove the particulate matter from the filter. Although a small amount of moisture remains in the filter by injection of the high-pressure vapor, the method for cleaning according to the present invention can prevent the moisture from remaining in the filter by injection of the high-pressure air.

The apparatus for cleaning according to the present can remove the moisture from the filter by injecting the high-pressure air in the filter, after removing the particulate matter from the filter by injecting the high-pressure vapor in the filter. In respect of calorific capacity, the water vapor in the gas phase state is bigger than water in the liquid phase state or the high-pressure air with the same temperature as the water vapor. Therefore, it is easy for the water vapor of the gas phase state to remove the high viscosity component from the filter, and the water vapor of the gas phase is effective for removal of the black smoke, the ash and so on. In other words, the apparatus for cleaning according to the present invention can effectively remove the particulate matter from the filter. Although a small amount of moisture remains in the filter by injection of the high-pressure vapor, the apparatus for cleaning according to the present invention can prevent the moisture from remaining in the filter by injection of the high-pressure air.

In the structure (a), the apparatus for cleaning according to the present invention can inject the high-pressure air in the filter, after injecting the high-pressure vapor in the filter, automatically. Therefore, it is easy to perform cleaning work of the filter.

In the structure (b), the apparatus for cleaning according to the present invention does not need a special heat source to generate the high-pressure vapor, because the apparatus uses the exhaust gas as a heat source. Therefore, the apparatus for cleaning according to the present invention is economically advantageous.

### BRIEF DESCRIPTION OF DRAWINGS

Fig.1 is a view showing structure of an apparatus for cleaning a filter for removing particulate matter (first embodiment).
Fig.2 is a sectional side view showing structure of a honeycomb filter.
Fig.3 is a graphical representation showing a differential pressure of a filter after cleaning only by high-pressure air and after cleaning by high-pressure vapor.
Fig. 4 is a view showing structure of an apparatus for cleaning a filter for removing particulate matter (second embodiment).
Fig.5 is a view showing structure of an apparatus for cleaning a filter for removing particulate matter (third embodiment).

### DESCRIPTION OF EMBODIMENTS

### (FIRST EMBODIMENT)

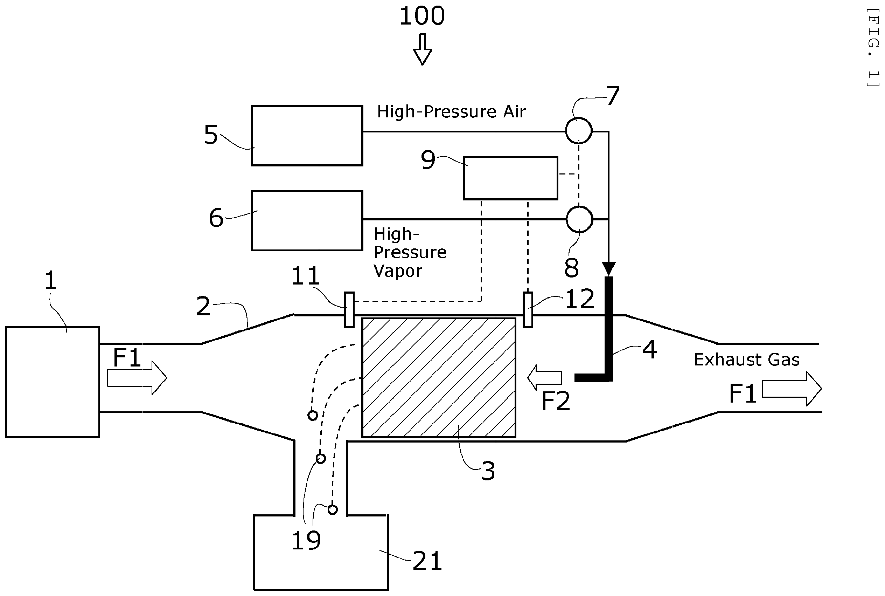

Fig.1 is a view showing structure of an apparatus 100 for cleaning a filter for removing particulate matter in the first embodiment. The Fig.1 shows an internal combustion engine 1, an exhaust passage 2 of the internal combustion engine 1, and the apparatus 100 for cleaning. Exhaust gas discharged from the internal combustion engine 1 passes through the exhaust passage 2, and is emitted into the atmosphere. In the Fig.1, a flow direction F1 of the exhaust gas is the right direction.

The apparatus 100 for cleaning comprises a filter 3, a injector 4, a high-pressure air feeder 5, a high-pressure vapor feeder 6, a air on-off valve 7, a vapor on-off valve 8, a controller 9, a upstream gas pressure sensor 11, and a downstream gas pressure sensor 12.

The filter 3 is installed in the exhaust passage 2 and captures the particulate matter contained in the exhaust gas.

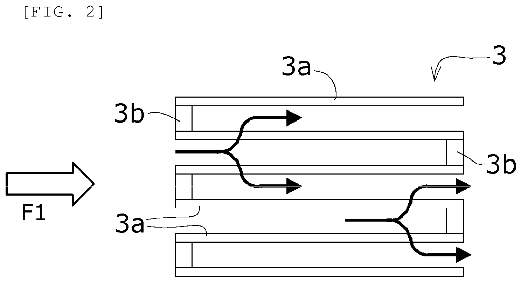

Fig.2 is a sectional side view showing structure of a honeycomb filter 3. The filter 3 has honeycomb structure which has a number of cells divided by partitions 3a. The each cell is, for example, a quadratic prism. When the filter 3 is arranged in the exhaust passage 2, the axial direction of the each cell is parallel to the flow direction F1 of the exhaust gas, and the surface of the partition 3a is also parallel to the flow direction F1. The each cell is alternately sealed with screens 3b in it's end. The partition 3a is a membrane filter and gas can pass the partition 3a. Micropores are formed in the membrane filter and the particulate matter in the exhaust gas passing through the partition 3a is captured by the partition 3a. Therefore, the exhaust gas passing through the filter 3 certainly passes through one of the partitions 3a, and the particulate matter in the exhaust gas is filtered. The material of the filter 3 is Preferably ceramics such as cordierite, silicon carbide, or silicon nitride.

In the Fig.1, the injector 4 is arranged at the downstream of the filter 3 in the flow direction F1. The injector 4 can inject the high-pressure air and the high-pressure vapor to the filter 3 in the opposite direction F2 to the flow direction F1.

In the Fig.1, the high-pressure air feeder 5 can feed the high-pressure air to the injector 4. The high-pressure vapor feeder 6 can feed the high-pressure vapor to the injector 4.

In the Fig.1, the air on-off valve 7 is arranged on the feed passage for feeding the high-pressure air from the high-pressure air feeder 5 to the injector 4. The vapor on-off valve 8 is arranged on the feed passage for feeding the high-pressure vapor from the high-pressure vapor feeder 6 to the injector 4. Both the air on-off valve 7 and the vapor on-off valve 8 are electromagnetic on-off valves. The air on-off valve 7 and the vapor on-off valve 8 constitute a switch for feeding alternatively one of the high-pressure air and the high-pressure vapor to the injector 4.

In the Fig.1, the upstream gas pressure sensor 11 and the downstream gas pressure sensor 12 constitute a differential pressure sensor detecting differential pressure of the filter 3. The upstream gas pressure sensor 11 is arranged at the upstream of the filter 3 in flow direction F1. The downstream gas pressure sensor 12 is arranged at the downstream of the filter 3 in flow direction F1. The differential pressure of the filter 3 is difference between the upstream gas pressure detected by the upstream gas pressure sensor 11 and the downstream gas pressure detected by the downstream gas pressure sensor 12. Each of the upstream gas pressure sensor 11 and the downstream gas pressure sensor 12 can detect the gas pressure in the place where oneself is arranged. Therefore, the differential pressure of the filter 3 is detected based on the upstream gas pressure detected by the upstream gas pressure sensor 11 and the downstream gas pressure detected by the downstream gas pressure sensor 12.

In the Fig.1, the controller 9 controls opening and closing of the air on-off valve 7 and the vapor on-off valve 8 as the switch. The controller 9 controls the air on-off valve 7 and the vapor on-off valve 8 so that one of the air on-off valve 7 and the vapor on-off valve 8 is opened alternatively. The controller 10 controls the switch based on information of the differential pressure of the filter 3 obtained by the differential pressure sensor.

In the Fig.1, the exhaust passage 2 has a dust box 21 in the upstream of the filter 3 in flow direction F1. The dust box 21 stores the particulate matter 19 removed from the filter 3 by operation of the injector 4.

Referring to the Fig.1, the operation of the apparatus 100 for cleaning is explained. When the differential pressure of the filter 3 exceeds a predetermined threshold value, the controller 9 decides to start cleaning treatment by the apparatus 100 for cleaning. When to start the cleaning treatment is decided, the controller 9 performs cleaning treatment, for example, when discharge of the exhaust gas to the exhaust passage 2 has stopped. Before stating the cleaning treatment, both the air on-off valve 7 and the vapor on-off valve 8 are closed. Therefore, the injector 4 does not operate.

The cleaning treatment includes the vapor injection process injecting the high-pressure vapor to the filter 3, and the air injection process injecting the high-pressure air to the filter 3. In the cleaning treatment, the air injection process is performed after the vapor injection process.

In the vapor injection process, the controller 9 opens only the vapor on-off valve 8. When the vapor on-off valve 8 is opened, the high-pressure vapor will be injected from the injector 4 to the filter 3 in the opposite direction F2 to flow direction F1 of the exhaust gas. Pressure of the high-pressure vapor, temperature of the high-pressure vapor, and the distance from the injector 4 to the filter 3 are set up so that the vapor injected from the injector 4 may maintain a gas phase state when the vapor has reached the entire surface (all the surfaces in which micropore is formed) of the filter 3. Therefore, the vapor in the gas phase state is sprayed on the entire surface of the filter 3. The detergency by vapor is stronger than detergency by high temperature air. Therefore, injection of the high-pressure vapor to the opposite direction F2 can remove the particulate matter 19, such as soot containing a high viscosity component, from the filter 3 more efficiently than injection of the high-pressure air to the opposite direction F2. After the vapor injection process is completed, the controller 9 closes the vapor on-off valve 8.

The particulate matter 19 removed from the filter 3 is stored in the dust box 21 arranged at the upstream of the filter 3.

In the air injection process, the controller 9 opens only the air on-off valve 7. When the air on-off valve 7 is opened, the high-pressure air will be injected from the injector 4 to the filter 3 in the opposite direction F2 to flow direction F1 of the exhaust gas. Here, moisture remains in the filter 3 by performing the vapor injection process. The injection of the high-pressure air to the opposite direction F2 in the air injection process can remove the moisture remaining in the filter 3 from the filter 3. After the air injection process is completed, the controller 9 closes the air on-off valve 7.

The cleaning treatment is completed by the end of the vapor injection process and the air injection process.

The pressures of the high-pressure air and the high-pressure vapor are both bigger than atmospheric pressure, and require to be the pressure which can feed air and vapor in the gas phase state to the entire surface of the filter 3. If the pressure is more than 0.4 Mpa, it is possible to effectively remove the particulate matter by the high-pressure vapor and to effectively dry the filter 3 by the high-pressure air. If the pressure is about 0.8 Mpa (saturated vapour pressure), manufacture of the high-pressure vapor has general versatility and it is easy to treat the high-pressure air and the high-pressure vapor.

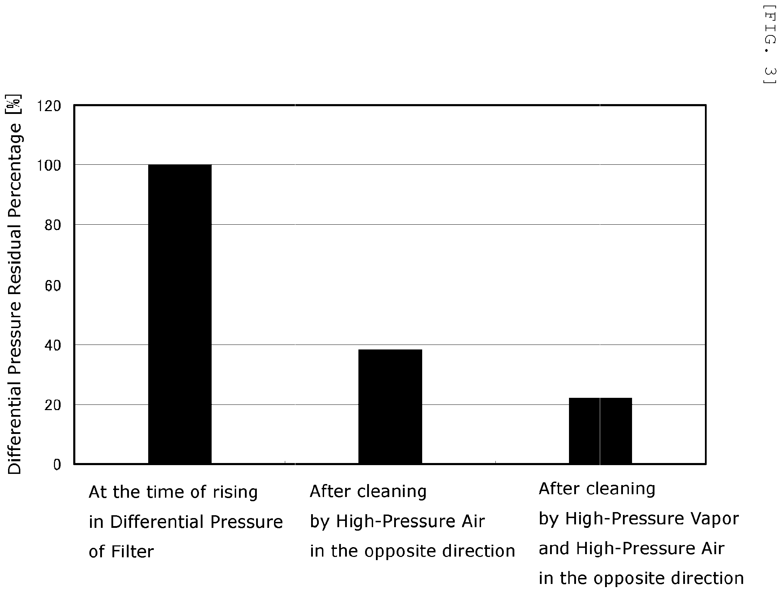

Fig.3 is a graphical representation showing a differential pressure of a filter after cleaning only by high-pressure air and after cleaning by high-pressure vapor. In the Fig.3, the vertical axis shows the residual percentage of the differential pressure of the filter, and the horizontal axis shows state of the filter 3. The states of the filter 3 include a state at the time of rising in the differential pressure of the filter, a state after cleaning only by the high-pressure air, and a state after cleaning by the high-pressure air and the high-pressure vapor. The state at the time of rising in the differential pressure of the filter shows a state before cleaning. The state at the time of rising in the differential pressure of the filter is set up as a standard of differential pressure residual percentage, and the residual percentage in this state is 100%. In the state after cleaning only by the high-pressure air, injection of the high-pressure air is performed not to dry moisture of the filter 3, but to remove the particulate matter from the filter 3. In the state after cleaning only by the high-pressure air, the differential pressure residual percentage is about 40%. Therefore, in the Fig.3, it is clear that cleaning by the high-pressure vapor is effective.

The apparatus 100 for cleaning according to the first embodiment has the following operation and effect by above-mentioned structure.

The apparatus 100 for cleaning comprises the filter 3, the injector 4, the high-pressure air feeder 5, and the high-pressure vapor feeder 6. Therefore, the apparatus 100 for cleaning can remove the moisture from the filter 3 by injecting the high-pressure air to the filter 3, after removing the particulate matter from the filter 3 by injecting the high-pressure vapor to the filter 3. In respect of calorific capacity, water vapor in a gas phase state is bigger than water in a liquid phase state or high-pressure air with the same temperature as the water vapor. Therefore, it is easy for the water vapor of the gas phase state to remove the high viscosity component from the filter 3, and the water vapor of the gas phase is effective for removal of the black smoke, the ash and so on. That is, the apparatus 100 for cleaning can effectively remove the particulate matter from the filter 3. Although a small amount of the moisture remains in the filter 3 by injection of the high-pressure vapor, the apparatus 100 for cleaning can prevent the moisture from remaining in the filter 3 by injection of the high-pressure air.

The apparatus 100 for cleaning further comprises the switch (the air on-off valve 7 and the vapor on-off valve 8) and the controller 9. Therefore, the apparatus 100 for cleaning can inject the high-pressure air in the filter 3, after injecting the high-pressure vapor in the filter 3, automatically. Therefore, it is easy to perform cleaning work of the filter.

### (SECOND EMBODIMENT)

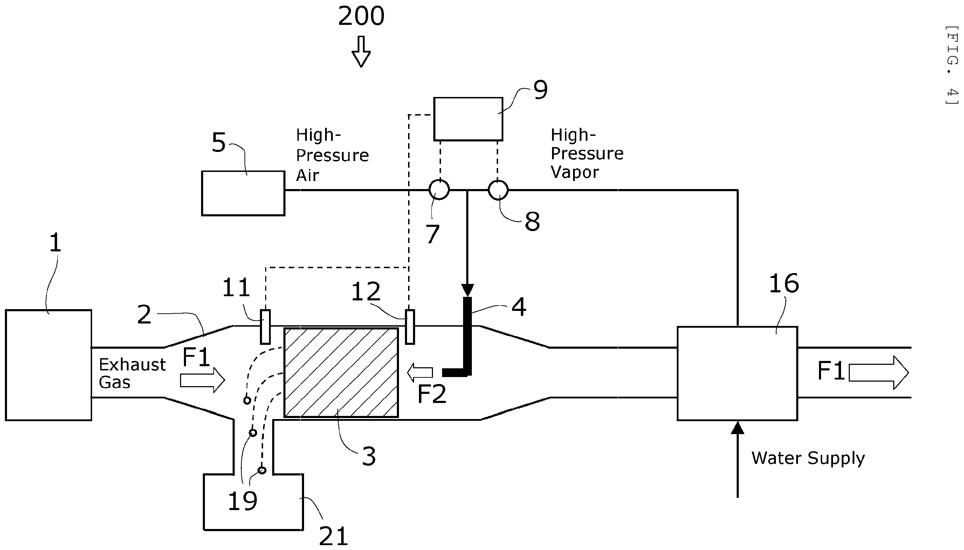

Fig.4 is a view showing structure of an apparatus 200 for cleaning a filter for removing particulate matter in the second embodiment. The second embodiment has an exhaust gas boiler 16 instead of the high-pressure vapor feeder 6 in the first embodiment. Both the high-pressure vapor feeder 6 and the exhaust gas boiler 16 are high-pressure vapor feeders which can feed the high-pressure vapor. The second embodiment has the same structure as the first embodiment except the structure of the exhaust gas boiler 16.

The exhaust gas boiler (vapor generator) 16 is installed on the exhaust passage 2. The exhaust gas boiler 16 is located in the downstream of the filter 3 in the flow direction F1 of the exhaust gas. Water is supplied to the exhaust gas boiler 16. By heat-exchanging between the water supplied in the exhaust gas boiler 16 and the exhaust gas flowing through the exhaust passage 2, the exhaust gas boiler 16 boils the water and generates the high-pressure vapor.

The apparatus for cleaning 200 in the second embodiment has the following effects by above-mentioned structure.

Since the apparatus for cleaning 200 uses the exhaust gas as a heat source, the apparatus for cleaning 200 does not need a special heat source in order to generate the high-pressure vapor. Therefore, the apparatus for cleaning 200 is economically advantageous.

### (Third embodiment)

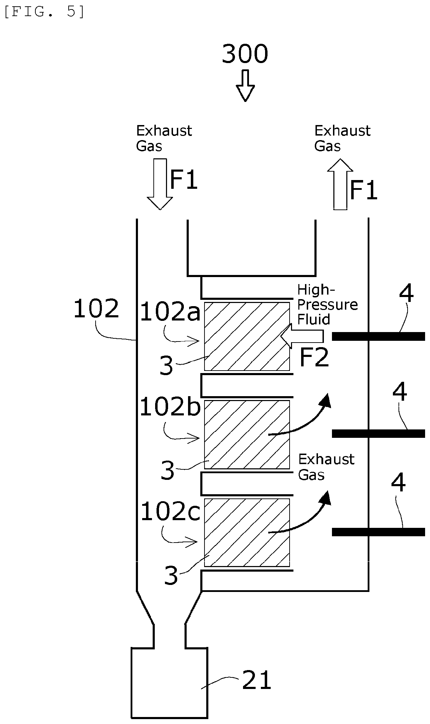

Fig.5 is a view showing structure of an apparatus 300 for cleaning a filter for removing particulate matter in the third embodiment. The third embodiment has a exhaust passage 102 instead of the exhaust passage 2 in the first embodiment. The exhaust passage 102 has three divergent pathways 102a, 102b, and 102c in the intermediate part. One filter 3 is arranged in each of the three divergent pathways 102a, 102b, and 102c. The third embodiment has three injectors 4 in order to correspond to each of the filters 3. The third embodiment also has the high-pressure vapor feeder 5, the high-pressure air feeder 6, and the switch (the vapor on-off valve 7 and the air on-off valve 8), although these are not illustrated. Naturally, the high-pressure vapor feeder 5, the high-pressure air feeder 6, and the switch (the vapor on-off valve 7 and the air on-off valve 8) are arranged, so that one of the high-pressure air and the high-pressure vapor may be alternatively supplied to each injector 4.

The operation of the apparatus 300 for cleaning is explained. If differential pressure of any one of the filters 3 exceeds a predetermined threshold value, the controller 9 starts cleaning treatment of the corresponding filter 3. Since the exhaust passage 102 has the three divergent pathways 102a, 102b, and 102c, even if the cleaning treatment is performed in one divergent pathway, discharge of the exhaust gas is not prevented. However, the controller 9 makes the start of new cleaning treatment stand by, if the cleaning treatments are simultaneously performed in the two filters 3 until the cleaning treatments under the running present cleaning treatments are completed.

If there are many amounts of exhaust gas flow, it is preferred like the third embodiment to arrange a plurality of the filters 3 in parallel.

### (Modification)

The following modification structures can be used for the apparatus for cleaning in the present embodiments.

The apparatus for cleaning is applicable to not only the exhaust passage of the internal combustion engine but also an exhaust passage of a burning appliance. The internal combustion engine includes a diesel engine, a gas engine, a gasoline engine, and a gas turbine, for example. The burning appliance includes a boiler, for example.

Manual control can be used for the apparatus for cleaning instead of the automatic control by the controller 9. The controller 8 is not included in the component of the apparatus for cleaning if the manual control is adopted. In the cleaning treatment, an operator opens and closes the air on-off valve 7 and the vapor on-off valve 8 which constitute the switch with manual operation.

The method for cleaning requires to include the vapor injection process and the air injection process performed after the vapor injection process, as minimum structure. The method for cleaning may include two or more times of the vapor injection processes, and two or more times of the air injection processes. However, the last process is certainly the air injection process so that the moisture does not remain in the filter 3.

The method for cleaning is not limited to adopting the case using the above-mentioned apparatus for cleaning. The operator may take out the filter 3 arranged in the exhaust passages of the internal combustion engine and so on, then may inject vapor to the taken-out filter 3, and then may inject air to the filter 3. In this case, the injector 4, the high-pressure vapor feeder 5, and the high-pressure air feeder 6 are arranged at the maintenance station, for example, and are installed separately from the exhaust passage 2 and the filter 3.

Execution of the cleaning treatment of the filter 3 is decided not only based on the differential pressure of the filter like the present embodiments but also based on the machine time of the internal combustion engine or the burner. For example, when the machine time exceeds predetermined time, the operator or the controller 4 decides to clean the filter 3. The time to clean the filter 3 may be not only time when discharge of exhaust gas is stopping but also time when the exhaust gas is being discharged.

### Reference Signs List

- 1: Internal Combustion Engine
- 2: Exhaust passage
- 3: Filter
- 4: Injector
- 5: High-Pressure Air Feeder
- 6: High-pressure Vapor Feeder
- 7: Air On-off Valve (a part of Switch)
- 8: Air On-off Valve(a part of Switch)
- 9: Controller
- 16: Vapor Generator

## Claims

1. A method for cleaning a filter (3) for removing particulate matter, the method injecting high-pressure air and high-pressure vapor to the filter (3) in a opposite direction to a flow direction of exhaust gas, the filter (3) installed in an exhaust passage (2) of an internal combustion engine (1) or a burning appliance and capturing the particulate matter included in the exhaust gas,
**characterised in that** after the high-pressure vapor is injected to the filter (3), the high-pressure air is injected to the filter (3).

2. An apparatus (100) for cleaning a filter (3) for removing particulate matter, the apparatus (100) comprising:
a filter (3) installed in an exhaust passage (2) of an internal combustion engine (1) or a burning appliance and capturing the particulate matter included in the exhaust gas;
an injector (4) being able to inject high-pressure air and high-pressure vapor to the filter (3) in a opposite direction to a flow direction of the exhaust gas;
a high-pressure air feeder (5) being able to feed the high-pressure air to the injector (4);
a high-pressure vapor feeder (6) being able to feed the high-pressure vapor to the injector (4), **characterised in that** the apparatus (100) further comprises:
a switch (7, 8) configured to alternatively feed one of the high-pressure air and the high-pressure vapor to the injector (4); and
a controller comprising means configured to control the switch (7, 8) so that after the high-pressure vapor is injected to the filter (3), the high-pressure air is injected to the filter (3).

3. The apparatus (100) according to claim 2, wherein the high-pressure vapor feeder (6) is a water vapor generator generating the high-pressure vapor with the exhaust gas as a heat source.

## Patentansprüche

1. Verfahren zum Reinigen eines Filters (3) zum Entfernen von Partikeln, wobei nach dem Verfahren Hochdruckluft und Hochdruckdampf in das Filter (3) in zu der Strömungsrichtung des Abgases entgegengesetzter Richtung eingespritzt werden, wobei das Filter (3) in einem Abgaskanal (2) eines Verbrennungsmotors (1) oder eines Verbrennungsgeräts eingebaut ist und die in dem Abgas enthaltenen Partikel abfängt,
**dadurch gekennzeichnet, dass** nach dem Einspritzen des Hochdruckdampfs in das Filter (3) die Hochdruckluft in das Filter (3) eingespritzt wird.

2. Vorrichtung (100) zum Reinigen eines Filters (3) zum Entfernen von Partikeln, wobei die Vorrichtung (100) aufweist:
ein Filter (3), das in einem Abgaskanal (2) eines Verbrennungsmotors (1) oder eines Verbrennungsgeräts eingebaut ist und die in dem Abgas enthaltenen Partikel abfängt;
einen Injektor (4), der in der Lage ist, Hochdruckluft und Hochdruckdampf in das Filter (3) in eine zu der Strömungsrichtung des Abgases entgegengesetzte Richtung einzuspritzen;
eine Hochdruckluftzuführvorrichtung (5), die in der Lage ist, dem Injektor (4) die Hochdruckluft zuzuführen;
eine Hochdruckdampfzuführvorrichtung (6), die in der Lage ist, dem Injektor (4) den Hochdruckdampf zuzuführen, **dadurch gekennzeichnet, dass** die Vorrichtung (100) ferner aufweist:
einen Schalter (7, 8), der zum alternativen Zuführen entweder der Hochdruckluft oder des Hochdruckdampfs zu dem Injektor (4) ausgebildet ist; und
eine Steuerung mit Einrichtungen, die dazu ausgebildet sind, den Schalter (7, 8) derart zu steuern, dass nach dem Einspritzen des Hochdruckdampfs in das Filter (3) die Hochdruckluft in das Filter (3) eingespritzt wird.

3. Vorrichtung (100) nach Anspruch 2, bei welcher die Hochdruckdampfzuführvorrichtung (6) ein Wasserdampfgenerator ist, der den Hochdruckdampf mit dem Abgas als einer Wärmequelle erzeugt.

## Revendications

1. Procédé pour nettoyer un filtre (3) afin de retirer la matière particulaire, le procédé comprenant les étapes suivantes : injecter de l'air à haute pression et de la vapeur à haute pression dans le filtre (3) dans une direction opposée à une direction d'écoulement du gaz d'échappement, le filtre (3) étant installé dans un passage d'échappement (2) d'un moteur à combustion interne (1) ou un appareil de combustion et capturer la matière particulaire comprise dans le gaz d'échappement,
**caractérisé en ce que**, après que la vapeur à haute pression a été injectée dans le filtre (3), l'air à haute pression est injecté dans le filtre (3).

2. Appareil (100) pour nettoyer un filtre (3) afin de retirer la matière particulaire, l'appareil (100) comprenant :
un filtre (3) installé dans un passage d'échappement (2) d'un moteur à combustion interne (1) ou un appareil de combustion et capturant la matière particulaire comprise dans le gaz d'échappement ;
un injecteur (4) pouvant injecter de l'air à haute pression et de la vapeur à haute pression dans le filtre (3) dans une direction opposée à une direction d'écoulement du gaz d'échappement ;
un dispositif d'alimentation en air à haute pression (5) pouvant amener l'air à haute pression à l'injecteur (4) ;
un dispositif d'alimentation en vapeur à haute pression (6) pouvant amener la vapeur à haute pression à l'injecteur (4), **caractérisé en ce que** l'appareil (100) comprend en outre :
un commutateur (7, 8) configuré pour amener, de manière alternée, l'un parmi l'air à haute pression et la vapeur à haute pression à l'injecteur (4) ; et
un organe de commande comprenant des moyens configurés pour commander le commutateur (7, 8) de sorte qu'après que la vapeur à haute pression a été injectée dans le filtre (3), l'air à haute pression est injecté dans le filtre (3).

3. Appareil (100) selon la revendication 2, dans lequel le dispositif d'alimentation en vapeur à haute pression (6) est un générateur de vapeur d'eau générant de la vapeur à haute pression avec le gaz d'échappement en tant que source de chaleur.
